# EUROPÄISCHE PATENTSCHRIFT

(11) **EP 1 593 971 B1**
(45) Veröffentlichungstag und Bekanntmachung des Hinweises auf die Patenterteilung: **15.02.2012**
(21) Anmeldenummer: 05009665.0
(22) Anmeldetag: 03.05.2005
(51) Int. Cl.: G01P 21/02, G01P 3/487, G01P 13/04, G01D 5/244, G01D 5/245, B65G 43/10, B65C 9/06

(54) **Vorrichtung und Verfahren zur Prüfung der Funktionstüchtigkeit eines Drehimpulsgebers**
Device and method for the verification of the functionality of an angular encoder
Dispositif et méthode pour vérifier le fonctionnement d'un codeur angulaire

(30) Priorität: 04.05.2004 DE 102004021928
(43) Veröffentlichungstag der Anmeldung: 09.11.2005
(73) Patentinhaber: Krones AG, 93073 Neutraubling (DE)
(72) Erfinder: Davidson, Hartmut, 93152 Nittendorf (DE)
(74) Vertreter: Schuster, Thomas

(56) Entgegenhaltungen:
- EP-A- 0 033 902
- DE-A1- 3 434 608
- DE-A1- 3 909 373
- DE-A1- 10 218 332
- JP-A- 9 264 762
- US-A- 4 898 271

## Beschreibung

Die Erfindung betrifft ein verfahren zur Prüfung der Funktionstüchtigkeit eines Drehimpulsgebers, der auf mindestens zwei Spuren je Spur pro Umdrehung eine vorbestimmte Anzahl von Impulsen mit vorbestimmten Impulslängen abgibt, sowie eine Prüfvorrichtung zur Prüfung der Funktionstüchtigkeit des Drehimpulsgebers.

In der Mess- und Automatisierungstechnik werden überwiegend digitale Messwertgeber, insbesondere Drehimpulsgeber, zur Positionswerterfassung eingesetzt. In vielen Maschinen und Anlagen, beispielsweise in Vorrichtungen zur Behandlung von Flaschen in der Getränkeindustrie, also beispielsweise in Abfüllvorrichtungen, Etikettiermaschinen, Streckblasmaschinen oder Mixern, stellen diese Messwertgeber die wichtigste Verbindung zwischen der Mechanik und der elektrischen bzw. elektronischen Steuerungs- und Regelungstechnik dar. Defekte Messwertgeber führen dazu, dass die Positionen der rotierenden und beweglichen Teile, also beispielsweise der Flaschen, einer Anlage nicht mehr exakt bestimmt werden können. Somit verliert der gesamte Maschinenprozess seine Synchronisation und führt üblicherweise zu einem Ausfall der gesamten Anlage und somit zu hohen Kosten.

Bei Drehimpulsgebern, die pro Umdrehung eine bestimmte Anzahl von Impulsen aussenden, kommt es durch verschiedene Fehler, wie z.B. bei Verschleißerecheinungen oder bei Verschmutzung, dazu, dass Impulse verschluckt oder zusätzlich erzeugt werden, d.h. der Istwert einer Impulsanzahl nicht mehr dem Sollwert entspricht. Um den Ausfall einer gesamten Maschine bzw. einer gesamten Anlage zu verhindern, ist es daher nötig, die Qualität der Signale des Drehimpulsgsbers zu überprüfen.

Aus der US 5,502,376 ist dazu eine Vorrichtung zur Überprüfung des Arbeitszyklus eines Impulsgenerators bekannt. Diese Vorrichtung zählt die Gesamtansahl der Impulse, die in einem Zeitintervall auftreten, und bestimmt ferner mit Hilfe von Taktimpulsen wie lange die einzelnen Impulse an bzw. aus sind, wodurch ein Durchschnittsarbeitszyklus berechnet wird. Mit Hilfe einer solchen Vorrichtung lassen sich zwar Informationen über die Impulse einer Spur ermitteln, bei Drehimpulsgebern mit mehreren Spuren ist diese Information jedoch nicht ausreichend um die volle Funktionstüchtigkeit des Drehimpulsgebers zu ermitteln.

Bei anderen Vorrichtungen zur Überprüfung von Drohispulugebern wird vorgeschlagen, das Ausbleiben eines Impulses innerhalb einer Prüfzeit zu erfassen und das als Kriterium für eine Qualitätsminderung zu nutzen. Solche Vorrichtungen sind beispielsweise aus der WO 90/04287, der DE 3511444 oder der DE4227113 bekannt. Jedoch tritt auch hier das Problem auf, dass Informationen nur über Impulse einer Spur ermittelt werden.

Das Dokument JP 9 264762 A zeigt ein Verfahren und eine Vorrichtung zur Prüfung eines Drehimpulsgebers mit mehreren Spuren.

Das Dokument DE3434608 zeigt einen Drehimpulsgeber, bei dem z.B. zwei um 90° Phasenverschobene Signale erzeugt werden. Es ist eine wegmesseinrichtung offenbart, die mit einem Vorwärts/ Rückwärtszähler ausgestattet ist, um die Drehrichtung des Drehimpulogebers anhand der relativen Phasenlage der beiden Impulsspuren zu bestimmen. Fällt eine Spur aus oder weist sie grobe Mängel auf, so kann über eine dann erscheinende fehlerhafte Richtungssignalausgabe über die Funktionsfähigkeit des Drehimpulsgebers entschieden werden.

Diese Vorrichtung weist den Nachteil auf, dass zwar die grundlegende Funktionstüchtigkeit, also das Vorhandensein der Spuren überprüft wird, aber keinerlei Aussagen über die Qualität des funktionierenden Drehimpulsgebers gemacht werden können.

Es ist daher Aufgabe der vorliegenden Erfindung, ein Prüfverfahren bzw. eine Prüfvorrichtung bereitzustellen, die es ermöglichen, bei einem Drehimpulsgeber mit mehrerer Spuren nicht nur die Funktionstüchtigkeit einzelner Spuren, sondern auch deren Zusammenspiel untereinander, also die Qualität der ausgegebenen Signale zu überprüfen.

Diese Aufgabe wird mit dem verfahren nach Anspruch 1 und der Prüfvorrichtung nach Anspruch 10 gelöst.

Demgemäß wird ein verfahren zur Prüfung der Funktionstüchtigkeit eines Drehimpulagebers, der auf mindestens zwei spuren je Spur pro Umdrehung einer vorbestimmten Anzahl von Impulsen mit vorbestimmten Impulslängen abgibt, bereitgestellt, das zur Prüfung der Funktionstüchtigkeit die Phasenlage zwischen mindestens einem Impuls einer Spur und mindestens einem Impuls einer anderen Spur erfasst, wobei aus erfassten Phasenlagen einer vorbestimmten Anzahl von Impulsen eine Phasenlagenverteilung bestimmt wird.

Die relative Lage von Impulsen zweier Spuren dient insbesondere dazu, die Richtung einer Drehung zu erkennen und ist insofern bei der Positionserfassung von hoher Bedeutung. Die Erfassung der Phasenlage, die üblicherweise in winkelgraden ausgedrückt wird, zwischen einem Impuls einer Spur und einem Impuls einer anderen Spur gibt dabei Auskunft darüber, inwieweit sich eine Phaselagenveränderung bezüglich der ursprünglichen Phasenlage ergaben hat und ob aus einer solchen Probleme bei der Positionserfassung auftreten können. Daher lässt sich mit diesem verfahren eine Verbesserung der Prüfung der Funktionstüchtigkeit erzielen.

Vorteilhafterweise kann man für zwei Spuren mit gleicher Anzahl von Impulsen die Phasenlage der Impulse erfassen, die sich innerhalb einer Periode befinden. Bei der Rotationserkannung nutzt man den zeitlichen verlauf beispielsweise der aufsteigenden Flanken eines Impulssignals (ebenso können dabei aber auch die fallenden Flanken benutzt werden) und schließt aus der Spur in der die aufsteigende Flanke als erstes auftritt, auf den Drehsinn. Da die aufeinanderfolgenden Impulse bei der Drehrichtungserkennung eine wichtige Rolle spielen, lässt sich durch die Erfassung der Phasenlage der in den zwei Spuren aufeinanderfolgend auftretenden Impulse zuverlässig auf die Funktionstüchtigkeit der Drehsinnerkennung schließen.

In einer Variante kann für zwei Spuren mit unterschiedlicher Anzahl von Impulsen die Phasenlage der Impulse erfasst werden, die sich innerhalb einer Periode, und dabei der kürzeren der beiden Perioden, befindet. Somit lässt sich die relative Phasenlage zwischen zwei Spuren auch für den Fall, dass die beiden Spuren eine unterschiedliche Anzahl von Impulsen aufweisen, zuverlässig ermitteln. Bei dieser Messung wird durch Erkennung der steigenden (oder fallenden) Flanke der ersten Spur und der folgenden steigenden (oder fallenden) Flanke einer anderen Spur und der dazwischenliegenden Zeitspanne die Phasenlage ermittelt.

Gemäß einer vorteilhaften Ausführungsform kann über mehrere Umdrehungen verteilt die Phasenlage zwischen entsprechenden Impulsen zweier Spuren für alle Impulse einer Umdrehung erfasst werden. Das heißt, dass nicht nur Impulse bestimmter Zeitfenster, sondern insgesamt alle Impulse einer Spur überprüft werden und somit der Drehimpulsgeber als Ganzes erfasst wird. Da je nach Drehimpulsgeber die Anzahl der Impulse ausgesprochen hoch sein kann, beispielsweise ca. 5000 Impulse pro Umdrehung, ist es dabei vorteilhaft, die Ausmessung der Phasenlage über mehrere Umdrehungen verteilt vorzunehmen. So kann man in regelmäßigen Abständen die Phasenlage zweier Impulse zueinander vermessen und bei der nächsten Umdrehung die auf die vermessenen Impulse folgenden Impulse ausmessen. Dies wird dann wiederholt, bis die Impulse einer vollständigen Umdrehung überprüft worden sind. Mit diesem Verfahren kann man daher selbst hochfrequente Impulse mit relativ kostengünstigen Komponenten zuverlässig auswerten.

Insbesondere vorteilhaft ist es dabei alle erfassten Phasenlagen zu benutzen, um den Drehimpulsgeber zu charakterisieren. Unter Phasenlagenverteilung versteht man dabei die Verteilung der Anzahl an Impulsen auf die einzelnen Phasenlagen. Die Phasenlagenverteilung zeigt dabei insbesondere im vergleich zur Herstellerspezifikation an, ob es zu einer Phasenlagenveränderung für alle Impulse gekommen ist, oder ob nur einzelne Impulse auf der Spur eine veränderte Phasenlage zueinander aufweisen. Dies gibt daher wertvolle Information über den Grund dieser Phasenlagenveränderung und der Auswirkung dieser Phasenlagenveränderung, woraus sich eventuell schließen lässt, ob ein Drehimpulsgeber noch weiter benutzt werden kann, repariert werden sollte oder nicht mehr einsatzfähig ist.

Zweckmäßigerweise kann zur Prüfung der Funktionstüchtigkeit zusätzlich das Verhältnis aus Impulslänge zu Impulspause für eine vorbestimmte Anzahl von Impulsen einer Spur erfasst werden. Durch die Kombination der Prüfung des Impulslängen-Impulspausenverhältnisses und der Phasenlage wird somit ein vollständigeres Bild der Funktionstüchtigkeit des Drehimpulsgebers erzielt, wodurch sich insbesondere aus der Kombination verbesserte Rückschlüsse auf die Herkunft etwaiger Probleme ziehen lassen.

Besonders vorteilhaft in dieser Hinsicht kann es sein, dass zur Prüfung der Funktionstüchtigkeit zusätzlich die Anzahl der Impulse einer Spur pro Umdrehung erfasst wird. Daher lässt sich in Verbindung mit der Phasenlage und eventuell dem impulslänge-zu-Impulspause Verhältnisses noch weitere komplementäre Information über die Funktionstüchtigkeit des Drehimpulsgebers erhalten.

Zweckmäßigerweise kann die Phasenlagenverteilung und/oder das Verhältnis aus Impulslänge zu Impulspause in der Form eines Histogramms ausgegeben werden. Trägt man also die Anzahl von erfassten Phasenlagen pro Winkel über das gesamte Winkelspektrum von 0 bis 360° auf, so lässt sich auf einen Blick erkennen, inwieweit die Impulse zweier Spuren noch in solch einem Verhältnis zueinander stehen, dass der Drehimpulsgeber funktionstüchtig ist. Ähnlich erkennt man auf einen Blick, ob die Anzahl der erfassten Impulslänge-zu-Impulspause-verhältnisse in Abhängigkeit von den möglichen Impulslänge-zu-Impulspause-verhältnisse von der ursprünglichen Verteilung abweicht und kann entsprechend auf die Funktionstüchtigkeit schließen oder nicht.

Ganz besonders vorteilhaft kann es sein, sowohl die Phasenlage von Impulsen zweier Spuren, das Impulslängen-zu-Impulspausen-Verhältnis für die Impulse einer spur in den jeweiligen Spuren, die Anzahl der Impulse in den jeweiligen Spuren als auch die Frequenz des Drehimpulsgebers zu bestimmen. Verbindet man diese Messungen mit dem vorteilhaften Ausgeben der Ergebnisse in Form von Histogrammen, so wird dabei ein Prüfungaverfahren erzielt, das sich schnell, einfach und zuverlässig durchführen lässt.

Die Erfindung stellt ferner ein Computerprogrammprodukt mit einem oder mehreren computerlesbaren Medien und mit computerausführbaren Befehlen zur Durchführung des vorangehenden Verfahrens bereit.

Die Erfindung betrifft ferner eine Prüfvorrichtung zur Prüfung der Funktionstüchtigkeit eines Drehimpulsgebers, der auf mindestens zwei Spuren je Spur pro Umdrehung eine vorbestimmte Anzahl von Impulsen mit vorbestimmten Impulslängen abgibt, wobei die Prüfvorrichtung eine Schnittstelle zum Lesen der Impulse der unterschiedlichen Spuren und ein Mittel zum Analysieren der Impulse umfasst, wobei das Mittel zum Analysieren so ausgebildet ist, dass die Phasenlage zwischen mindestens einem Impuls einer Spur und mindestens einem Impuls einer anderen Spur erfassbar ist, wobei das Mittel zum Analysieren so ausgebildet ist, dass eine Phasenlagenverteilung aus erfassten Phasenlagen einer vorbestimmten Anzahl von Impulsen bestimmbar ist.

Die Erfassung der Phasenlage zwischen einem Impuls einer Spur und einem Impuls einer anderen Spur gibt dabei Auskunft darüber, inwieweit sich eine Phasenlagenverdnderung bezüglich der ursprünglichen Herstellerspezifikationen ergeben hat und ob aus einer solchen Probleme bei der Positionserfassung auftreten können. Daher lässt sich mit dieser Prüfvorrichtung eine verbesserung der Überprüfung der Funktionstüchtigkeit von Drehimpulegebern erzielen.

Gemäß einer vorteilhaften Ausführungsform kann das Mittel zum Analysieren so ausgebildet sein, dass zur Prüfung der Funktionstüchtigkeit zusätzlich das Verhältnis aus Impulslänge zu Impulspause für eine vorbestimmte Anzahl von Impulsen einer Spur erfassbar ist. Durch die Kombination der Prüfung des Impulslänge-zu-Impulspause-Verhältnisses und der Phasenlage wird ein vollständigeres Bild der Funktionstüchtigkeit des Drehimpulsgebers erzielt, wodurch sich insbesondere aus der Kombination verbesserte Rückschlüsse auf die Herkunft etwaiger Probleme des Drehimpulsgebers ziehen lassen.

Gemäß einer weiteren vorteilhaften Ausführungsform kann das Mittel zum Analysieren so ausgebildet sein, dass zur Prüfung der Funktionstüchtigkeit zusätzlich die Anzahl der Impulse einer Spur pro Umdrehung erfasst wird. Daher lässt sich in Verbindung mit der Phasenlage noch zusätzliche Information erzielen, was weiterhin dazu dient, die Funktionstüchtigkeit des Drehimpulsgebers vollständiger zu prüfen.

Die Phasenlagenverteilung zeigt dabei an, ob es zu einer Phasenlagenveränderung gekommen ist und ob sich diese auf die Funktionstüchtigkeit des Drehimpulsgebers auswirkt.

Günstigerweise kann die Prüfvorrichtung mit einem Ausgabemittel zur Ausgabe der Phasenlagenverteilung und/oder des Impulslänge-zu-Impulspause-Verhältnisses in der Form eines Histogramms versehen sein. Mit Hilfe eines Histogramms erkennt der Benutzer auf einen Blick, ob der untersuchte Drehimpulsgeber noch funktionstüchtig ist oder nicht. Die Ausgabe kann aber auch nicht graphisch, also in Absolutwerten auf dem Ausgabemittel erfolgen. Ein solches Absolutwert Ausgabemittel könnte beispielsweise ein mehrstelliges LCD-Display sein.

Die Erfindung betrifft weiterhin eine Vorrichtung zur Behandlung von Flaschen in der Getränkeindustrie, insbesondere eine Abfüllvorrichtung, eine Etikettiermaschine, eine Streckblasmaschine, einen Packer, einen Pallettierer und Transportbänder, mit mindestens einem Drehimpulsgeber zur Positionserfassung von sich in der Vorrichtung befindlichen Flaschen und einer Prüfvorrichtung zur Prüfung der Funktionstüchtigkeit des Drehimpulsgebers. Vorrichtungen dieser Art, die beispielsweise in einem Gesamtmaschinenprozess mit hohen Durchsätzen benutzt werden, haben den vorteil, dass man Dank der Prüfvorrichtung schnell erkennen kann, ob die Positionierung durch die Drehimpulsgeber noch gewährleistet ist, oder ob ein Austausch eines Drehimpulsgebers aufgrund von Abnutzungserscheinungen oder dauernden Fehlstellen, wie zum Beispiel Verschmutzungen, nötig wird.

Vorteilhafterweise kann dabei die vorrichtung eine Schnittstelle zum Anschließen der Prüfvorrichtung aufweisen. Daher kann die Prüfvorrichtung entweder integral mit der Vorrichtung verbunden sein, oder aber Dank der Schnittstelle auf die Vorrichtung auf- und abmontiert werden, wobei man die Drehimpulsgeber mehrerer Maschinen mit nur einer Prüfvorrichtung prüfen kann.

Die erfindungsgemäße Vorrichtung weist eine Prüfvorrichtung wie oben beschrieben auf. Diese Prüfvorrichtung ist in besonderem Maße geeignet, da Dank der Phasenlagenbestimmung auch die Eigenschaften der Spuren untereinander analysiert werden.

Günstigerweise kann die Prüfvorrichtung der Vorrichtung so ausgebildet sein, dass kontinuierlich, zu vorgegebenen Zeitpunkten oder auf Anfrage, die Funktionstüchtigkeit des Drehimpulsgebers geprüft wird. Bei kontinuierlicher Prüfung bzw. bei Prüfung zu vorgegebenen Zeitpunkten kann man die zeitliche Entwicklung der Funktionstüchtigkeit überprüfen und Tendenzen aufzeigen, die andeuten können wann der geprüfte Drehimpulsgeber nicht mehr funktionstüchtig sein wird. Die Möglichkeit, auf Anfrage die Funktionstüchtigkeit zu prüfen, ermöglicht es darüber hinaus bei geplanten oder spontanen Inspektionen den Drehimpulsgeber auf seine Funktionstüchtigkeit zu überprüfen.

In einer bevorzugten Ausführungsform kann die Prüfvorrichtung der Vorrichtung so ausgebildet sein, dass, wenn die erfasste Phasenlagenverteilung einer ersten vorbestimmten Phasenlagenverteilung entspricht, automatisch eine Abschaltinstruktion an die Vorrichtung gegeben wird und/oder, wenn die erfasste Phasenlagenverteilung einer zweiten Phasenlagenverteilung entspricht, ein Warnsignal ausgegeben wird und/oder, wenn die erfassten Impulslänge-zu-Impulspause-Verhaltnisse einem ersten vorbestimmten Impulslänge-zu-Impulspause-Verhältnis entsprechen, automatisch die Abschaltinstruktion an die Vorrichtung gegeben wird und/oder, wenn die erfasste Impulslänge-zu-Impulspause-Verhältnisse einem zweiten Impulslänge-zu-Impulspause-Verhältnis entsprechen, ein Warnsignal ausgegeben wird. Dank des Warnsignals kann man einen Drehimpulsgeber ersetzen bevor dieser nicht mehr funktioniert. So lässt sich eine Fehlfunktion der ganzen Anlage verhindern. Dies verbessert die Wirtschaftlichkeit der Vorrichtung.

Bevorzugte Ausführungsformen der Erfindung werden in der Zeichnung dargestellt und nachstehend erläutert. Es zeigen:
- Fig. 1: schematisch eine Vorrichtung zur Behandlung von Flaschen in der Getränkeindustrie mit einer erfindungsgemäßen Prüfvorrichtung;
- Fig. 2: schematisch Impulse eines Drehimpulsgebers, der auf vier Spuren Impulse mit verschiedenen Impulslängen und Anzahlen darstellt;
- Fig. 3: schematisch das erfindungsgemäße Verfahren zur Bestimmung der Phasenlage zwischen einem Impuls einer Spur und einem Impuls einer anderen Spur, wobei die Spuren die gleiche Anzahl von Impulsen aufweisen;
- Fig. 4: ein Histogramm einer ermittelten Phasenlagenverteilung;
- Fig. 5: schematisch das erfindungsgemäße verfahren zur Bestimmung der Phasenlage zwischen Impulsen einer Spur und einem Impuls einer anderen Spur, wobei die Perioden der beiden Spuren unterschiedlich sind;
- Fig. 6: schematisch die Bestimmung des Verhältnisses aus Impulslänge zu Impulspause;
- Fig. 7: ein Histogramm, das das Ergebnis der Impulslängezu-Impulspausen-Bestimmung der Fig. 5 darstellt;
- Fig. 8: schematisch die Ermittlung der Anzahl der Impulse, die in einer Umdrehung je Spur auftreten.

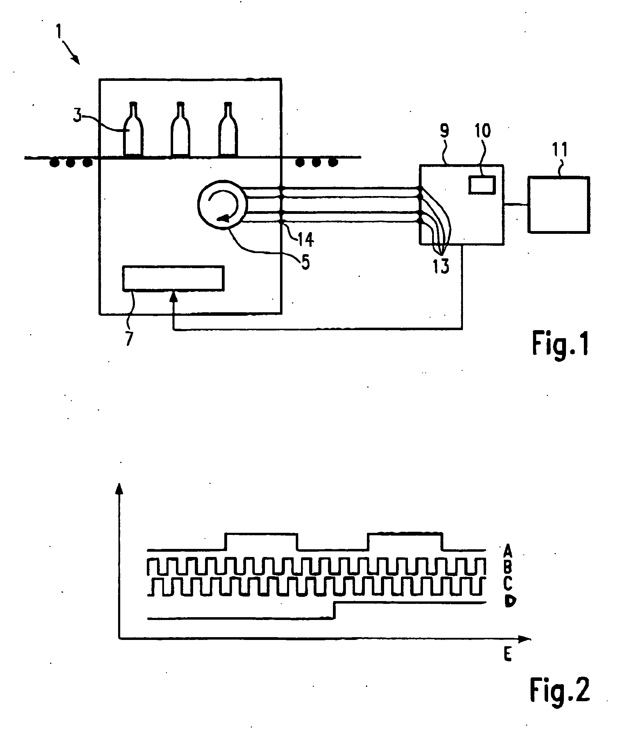

Fig. 1 zeigt schematisch eine Vorrichtung 1 zur Behandlung von Flaschen in der Getränkeindustrie. Die Vorrichtung 1 kann dabei eine Abfüllvorrichtung, eine Etikettiermaschine, einen Packer, einen Pallettierer oder Transportbänder darstellen, wie sie bei der Getränkeabfüllung üblicherweise benutzt werden. Außerdem kann die Vorrichtung 1 auch eine Streckblasmaschine zur Herstellung von Flaschen oder jegliche andere Maschine repräsentieren, bei der die Positionserfassung der in der Vorrichtung vorhandenen Produkte eine wichtige Rolle spielt.

Zur Positionserkennung benutzt die Vorrichtung einen Drehimpulsgeber 5. Ferner umfasst die Vorrichtung 1 auch eine Steuereinheit 7, die den Transport der Flaschen 3 durch die Vorrichtung 1 mit Hilfe des Drehimpulsgebers 5 steuert. Erfindungsgemäß ist der Drehimpulsgeber 5 mit einer Prüfvorrichtung 9 verbunden, welche wiederum ein Ausgabemittel 11 aufweist.

Die Prüfvorrichtung 9 ist über ihre Schnittstelle 13 mit einer Schnittstelle 14 des Drehimpulsgeber 5 verbunden und weist zusätzlich ein Mittel 10 zum Analysieren der vom Drehimpulsgeber erhaltenen Impulsfolgen auf. Das Ausgabemittel 11 kann dabei integral mit der Prüfvorrichtung 9 verbunden sein, beispielsweise in Form eines Bildschirms oder eines LCD-Displays, oder eventuell auch Teil eines mit der Prüfvorrichtung 9 verbundenen Computers sein. Ebenso kann die Prüfvorrichtung 9 selbst integral mit der Vorrichtung 1 verbunden sein, oder aber als eigenständige Prüfvorrichtung 9 an die Vorrichtung 1 oder den Drehimpulsgeber 5 angeschlossen werden.

Die Prüfvorrichtung 9 kann einerseits so ausgebildet sein, dass das Prüfergebnis über das Ausgabemittel 11 ausgegeben wird, so dass ein Betreiber der Vorrichtung je nach Prüfergebnis den Drehimpulsgeber 5 ausbaut und repariert oder gegebenenfalls ersetzt oder nicht. Andererseits kann die Prüfvorrichtung 9 jedoch auch so ausgelegt sein, dass das Prüfergebnis direkt der Steuereinheit 7 der Vorrichtung 1 zugeführt wird, so dass im Falle einer Fehlfunktion des Drehimpulsgebers 5, die Steuereinheit 7 die Vorrichtung 1 automatisch abschaltet.

Ist der Drehimpulsgeber 5 noch funktionstüchtig, hat jedoch die Prüfvorrichtung 9 eine gewisse Abweichung von den Herstellerspezifikationen identifiziert, so kann die Prüfvorrichtung 9 auch über das Ausgabemittel 11 oder die Steuereinheit 7 ein Warnsignal an den Betreiber der Vorrichtung 1 ausgeben. Dieses Warnsignal macht dann den Betreiber darauf aufmerksam, dass bei der nächsten Maschineninspektion der Drehimpulsgeber ausgetauscht werden sollte, um einen Ausfall bzw. eine Fehlfunktion der Vorrichtung 1 aufgrund eines defekten Drehimpulsgebers 5 zu verhindern.

Erfindungsgemäß prüft die Prüfvorrichtung 9 den Drehimpulsgeber kontinuierlich, oder zu vorgegebenen Zeitpunkten. Eine Prüfung des Drehimpulsgebers wird jedoch auch auf Anfrage des Betreibers der Vorrichtung 1 durchgeführt.

Anhand der folgenden Figuren 2 bis 7 wird nun die Funktionsweise der Prüfvorrichtung 9, sowie das erfindungsgemäße verfahren zur Prüfung des Drehimpulsgebers 5 anhand einer Ausführungsform näher erläutert.

Bei dem in der Fig. 1 dargestellten Drehimpulsgeber 5 handelt es sich üblicherweise um einen mehrkanaligen inkrementalen Drehimpulsgeber. Mehrkanalig bedeutet hierbei, dass der Drehimpulsgeber eine Impulsscheibe (nicht gezeigt) mit mehreren Spuren aufweist, die jeweils getrennt voneinander ausgewertet und eventuell miteinander verglichen werden. Dank der mehreren Spuren werden zeitgleich verschiedene Rechteckimpulssignale ausgegeben.

Fig. 2 zeigt schematisch die Rechteckimpulssignalabfolge eines vierspurigen Drehimpulsgebers, wie er üblicherweise bei industriellen Anwendungen zum Einsatz kommt. In Fig. 2 dargestellt sind die Rechteckimpulssignale für eine vollständige Umdrehung. Es werden vier verschiedene, in definierter Lage zueinanderstehende Impulsfolgen mit drei verschiedenen Impulsanzahlen und drei verschiedenen Impulslängen dargestellt. So hat der Kanal A in einer Umdrehung zwei Impulse, der Kanal B und C 18 Impulse, wobei die Kanäle B und C um eine Viertelperiode oder 90° zueinander verschoben sind. Der Kanal D weist nur einen Impuls pro Umdrehung auf. Die dargestellten Impulsfolgen haben einen Arbeitszyklus von 50 Prozent, d.h. die Impulslänge entspricht der Länge der Impulspausen. Prinzipiell sind auch andere Arbeitszyklen denkbar. Natürlich ist auch die Anzahl der Impulse pro Umdrehung frei wählbar und sind bei einem Drehimpulsgeber für die industrielle Anwendung beispielsweise je nach Spur 5000, 10 und 1 Impuls pro Umdrehung.

Die elektronischen Komponenten, die für die Prüfvorrichtung 9 benutzt werden, sollten so gewählt werden, dass sie schnell genug sind, um die Signale auswerten zu können.

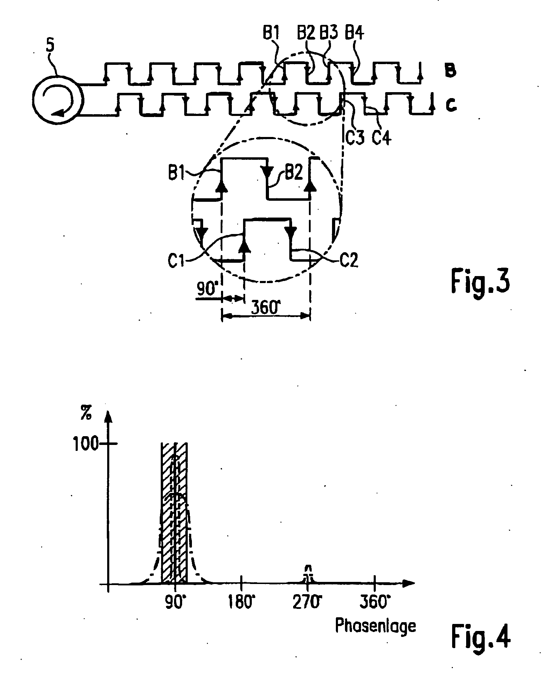

Fig. 3 zeigt schematisch die Erfassung der Phasenlage zwischen Impulsen zweier Spuren, wobei beide Spuren B und C die gleiche Anzahl von Impulsen pro Umdrehung aufweisen. Erfindungsgemäß wird die erfasste Phasenlage dazu benutzt, die Funktionstüchtigkeit des Drehimpulsgebers 5 zu überprüfen. Die relative Phasenlage zwischen den Impulsen der Spur B und der Spur C wird mit Hilfe einer sogenannten Vierquadrantenauswertung ermittelt. Unter der Vierquadrantenauswertung versteht man die Auswertung der steigenden Flanke B1 des Signals der Spur B (siehe vergrößerter Ausschnitt) zur steigenden Flanke C1 des Signals der Spur C, der fallenden Flanke B2 des Signals der Spur B zur steigenden Flanke C1 des Signals der Spur C, der fallenden Flanke B2 des Signals der Spur B zur fallenden Flanke C2 des Signals der Spur C, sowie die steigende Flanke B1 des Signals der Spur B zur fallenden Flanke C2 des Signals der Spur C. Dank der gemessenen Zeitunterschiede der verschiedenen Flanken lässt sich daraus die relative Phasenlage der zwei Signale zueinander ermitteln.

Das Ergebnis wird üblicherweise in Winkelgraden angegeben. Einer vollständigen Periode entspricht 360°. Im Beispiel der Figur 3 erhält man für die gezeigten Signale B und C (mit den Flanken B1, B2 bzw. C1, C2) eine relative Phasenlage von 90°.

In diesem Beispiel wurde die relative Phasenlage des Signals C bezüglich des Signals B ermittelt. Auf gleiche Art und weise kann man auch die relative Phasenlage des Signals B bezüglich des Signals C ermitteln. Die Phasenlagen unterscheiden sich dann nur durch das Vorzeichen.

Da die Prüfvorrichtung 9 einen gewissen Zeitraum benötigt, um die gemessenen Daten auszuwerten, werden nach der Erfassung der Flanken B1, B2 und C1, C2 nicht sofort die folgenden Impulse mit den Flanken B3, B4 auf der Spur B und den Flanken C3, C4 auf der Spur C erfasst. Erfindungsgemäß wird die relative Phasenlage der folgenden Impulse über mehrere Umdrehungen verteilt erfasst. Wird beispielsweise nur jeder 20. Impuls einer Umdrehung erfasst, so benötigt man insgesamt 20 Umdrehungen, um alle Impulse zu erfassen. Vorteilhafterweise wird dabei bei jeder Umdrehung der auf den schon vermessenen Impuls folgende Impuls relativ zum folgenden Impuls der anderen Spur analysiert.

Die erfassten Phasenlagen werden in einem Speicher (nicht gezeigt) der Prüfvorrichtung 9 zwischengespeichert, sodass aus den erfassten Phasenlagen eine Phasenlagenverteilung ermittelt werden kann, die in Form eines Histogramms ausgegeben wird.

Fig. 4 zeigt beispielhaft ein Histogramm, das die Phasenlagenverteilung des Drehimpulsgebers 5 (siehe Fig. 1) zeigt. Auf der x-Achse wird dabei die Phasenlage in winkelgraden und auf der y-Achse die Anzahl der erfassten Phasenlagen pro Winkelgrad aufgetragen. In einem Idealfall hat beispielsweise der Impulsgeber 5 für alle Impulse der Spuren B und C eine Phasenlage von 90° (vertikale durchgezogenen Linie). Im Realfall hat jedoch ein funktionierender Drehimpulsgeber eine Phasenlagenverteilung, die sich eng an diese ideale Phasenlagenverteilung anlegt (siehe gestrichelte Kurve). Unterscheidet sich die Phasenlagenverteilung erheblich von dieser Idealphasenlagenverteilung, so lässt sich auf einen Mangel an Funktionstüchtigkeit schließen. Die histografische Darstellung hat dabei den Vorteil, dass der Betreiber der Vorrichtung 1 mit einem Blick erkennt, ob die Phasenlagenverteilung noch im erlaubten Bereich (schraffierter Bereich) liegt. Weicht die Phasenlagenverteilung aufgrund von dauerhaften Fehlern wie Abnutzungserscheinungen oder Verschmutzungen des Drehimpulsgebers davon ab (gestrich-punktete Phasenlagenverteilung), wird von der Prüfvorrichtung 9 ein warnsignal ausgegeben oder die Vorrichtung 1 wird automatisch durch die Steuereinheit 7 abgeschalten.

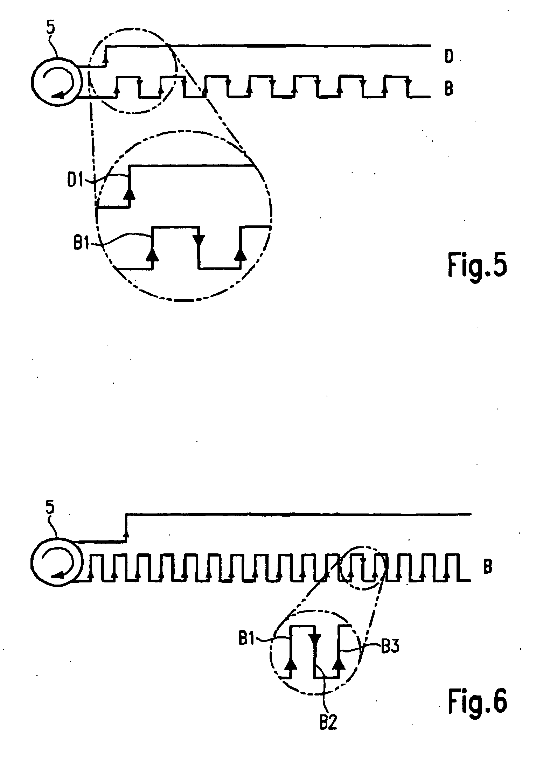

Neben der Ermittlung der Phasenlage zwischen Spuren mit gleichen Anzahl von Impulsen wird erfindungsgemäß auch die Phasenlage zwischen Spuren mit unterschiedlicher Anzahl von Impulsen, wie beispielsweise bei der Spur D und B, die Phasenlage zur Prüfung der Funktionstüchtigkeit ermittelt. Dies wird anhand der Fig. 5 erläutert.

Im Drehimpulsgeberbeispiel der Fig. 2 hat die Spur D einen Impuls pro Umdrehung. Bei dieser Phasenlagenmessung wird der Phasenversatz zwischen der steigenden Flanke D1 des Signals der Spur D und der steigenden Flanke B1 des Signals der Spur B ermittelt. Gemessen wird daher die Zeitspanne zwischen der steigenden Flanke der Spur D und der ersten steigenden Flanke B1 der Spur B. Diese wird dann zur Ermittlung der Phasenlage durch die Periodendauer des Impulses der Spur B geteilt und in Winkelgrade umgewandelt. Aus dieser Messung erfährt man somit inwieweit sich ein veränderter zeitlicher Versatz der Spur B zur Spur D ergeben hat. Wird diese Änderung zu groß, so ist der Drehimpulsgeber 5 nicht mehr funktionstüchtig.

Erfindungsgemäß wird in dieser Ausführungsform zur Prüfung der Funktionstüchtigkeit des Drehimpulsgebers 5 zusätzlich das Verhältnis aus Impulslänge zu Impulspause für eine vorbestimmte Anzahl von Impulsen einer Spur erfasst. Das von der Prüfvorrichtung 9 durchgeführte Messprinzip des Impulslänge-zu-Impulspause-Verhältnisses wird schematisch anhand der Fig. 6 erklärt.

Die Ermittlung des Impulslänge-zu-Impulspause-Verhältnis wird anhand der Spur B erläutert. Das Messprinzip besteht darin, dass drei aufeinanderfolgende Flanken B1, B2 und B3 zeitlich erfasst werden. Die steigende Flanke B1 und die fallende Flanke B2 eines Impulses und die steigende Flanke B3 (siehe vergrößerten Ausschnitt der Fig. 6) des folgenden Impulses. Aus diesen drei Zeitinformationen ermittelt die Prüfvorrichtung 9 dann das Impulslänge-zu-Impulspause-Verhältnis. Da, wie schon bei Phasenlagenbestimmung, die Auswertung der gemessenen Zeiten durch die Prüfvorrichtung 9 eine gewisse Zeit erfordert, werden wieder alle Impulse einer Umdrehung über mehrere Umdrehungen verteilt ausgemessen, um das Impulslänge-zu-Impulspause-Verhältnis für alle Impulse einer Spur zu ermitteln. Beispielsweise wird jeder x-te Impuls vermessen und in der zwischen zwei vermessenen Impulsen liegenden zeit ausgewertet. Nach einer Umdrehung des Gebers wird dann ein Versatz von einem Impuls erzeugt, damit nicht wiederum die gleichen, bereits vermessenen Impulse, erfasst werden. Dies wird solange wiederholt, bis schließlich alle Impulse vermessen sind. Die Impulslänge-zu-Impulspause-verhältnisse werden dann im Speicher der Vorrichtung 9 gespeichert. Die gemessenen Daten werden dann in Form eines Histogramms ausgegeben, um die Verteilung der Impulslänge-zu-Impulspause-Verhältnisse darzustellen.

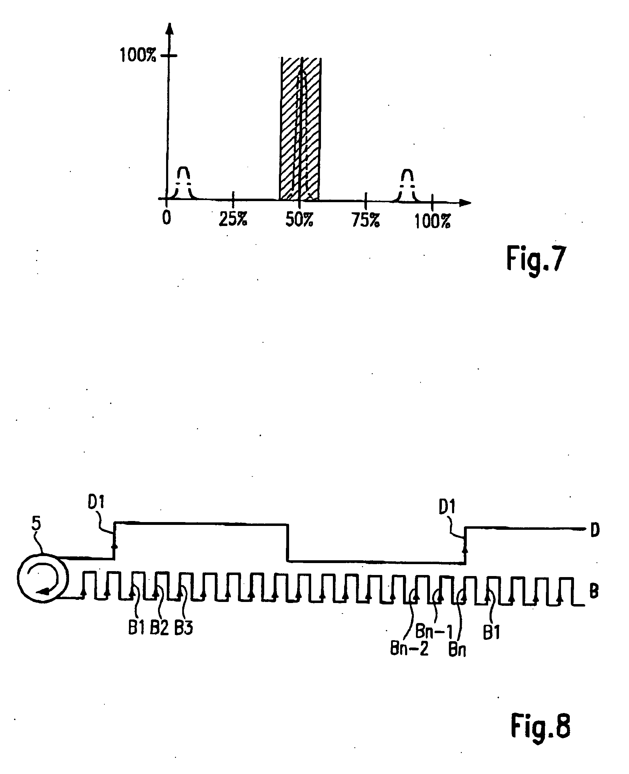

Ein Beispiel eines solchen Histogramms wird in der Fig. 7 dargestellt. Auf der x-Achse wird das Impulslänge-zu-Impulspause-Verhältnis in Prozent aufgetragen und auf der y-Achse die Anzahl der erfassten Verhältnisse pro Impulslänge-zu-Impulspause-Verhältnis. Je nach Anwendung werden unterschiedliche impulslänge-zu-Impulspause-Verhältnisse (Arbeitszyklen) benötigt. Soll der Arbeitszyklus beispielsweise 50 Prozent für alle Impulse betragen, so ergibt sich im Histogramm eine vertikale Linie (siehe durchgezogene Linie). Eine reale Verteilung ist mit einer gestrichelten Linie dargestellt und liegt nahe an der idealen Verteilung. Solange diese Verteilung im schraffierten Bereich, der sich beispielsweise aus Herstellerspezifikationen oder Erfahrungswerten ergibt, liegt, ist die Funktionstüchtigkeit des Drehimpulsgebers 5 gegeben. Gehen einige Impulse der Spur verloren, so sind im Histogramm auch Anteile vorhanden, die nahe der 0 Prozent liegen (siehe Strich-Punkte-Linie). Es kann aber eventuell auch zu einer Impulsbreitenaufweitung kommen, so dass im Histogramm Anteile mit hohen Arbeitszyklen auftreten (siehe Doppelpunkt-Strich-Linie). Diese an den Extremitäten auftauchenden Anteile sind dann ein Zeichen für einen nicht mehr funktionstüchtigen Drehimpulsgeber.

Erfindungsgemäß ist die Ausführungsform der Prüfvorrichtung 9 so ausgebildet, dass zur Prüfung der Funktionstüchtigkeit zusätzlich auch die Anzahl der Impulse einer Spur pro Umdrehung erfasst wird. Dieser Teil des Prüfverfahrens wird schematisch anhand der Fig. 8 dargestellt.

Der Drehimpulsgeber 5 gibt pro Umdrehung eine bestimmte Anzahl von Impulsen ab. Bereits das Fehlen eines Impulses kann bei der gewünschten Anwendung nicht mehr akzeptiert werden. Bei einer inkrementalen Messwerterfassung, bei der sich die Anzahl der Fehlimpulse bei jeder Umdrehung addiert, führt dies bei den Maschinen dazu, dass sich der Istwert vom Sollwert immer weiter entfernt. Ist ein solcher fehlerhafter Drehimpulsgeber in einer Etikettiermaschine, beispielsweise zur positionserfassung, vorhanden, so macht sich ein solcher Fehler bemerkbar, indem der Versatz des Etiketts bezüglich der Sollposition bei den Flaschen immer größer wird. Daher spielt diese Messung in Verbindung mit den schon erwähnten Messungen ebenfalls eine wichtige Rolle.

Wie in der vorangehenden Figuren 3, 5 und 6 wird der zeitliche verlauf der Impulse einer Spur dargestellt. Bei der Impulszahlmessung wird im Beispiel die Spur B unter zuhilfenahme der Spur D benutzt. Das Prinzip der Pulszahlenmessung besteht darin, dass ab einem gewissen Ausgangspunkt alle steigenden Flanken B1, B2, B3, ..., Bn-2, Bn-1 und Bn gezählt werden, bis nach einer Umdrehung des Drehimpulsgebers die erste Flanke B1 wieder erreicht wird. Als Ausgangs- und Endpunkt dieser Messung wird hierbei die steigende Flanke D1 der Spur D, die nur einen Impuls pro Umdrehung aufweist, benutzt. Nach Ablauf einer Umdrehung des Drehimpulsgebers 5 wird der benutzte Zähler (nicht gezeigt) ausgelesen und mit dem Sollwert verglichen. Ergibt sich ein Unterschied, so wird der Benutzer gewarnt. Eventuell kann auch ein Grenzwert festgelegt werden und sobald dieser übertroffen wird, wird die Maschine automatisch gestoppt.

Das Prüfgerät der dargestellten Ausführungsform ermöglicht es somit Drehimpulsgeber, die in Maschinen an vielfältigen Einsatzorten Verwendung finden, auf ihre Funktionsfähigkeit und Zuverlässigkeit zu überprüfen. Das Messgerät ist dabei so ausgelegt, dass es mehrere Eigenschaften des Drehimpulsgebers misst. Diese umfassen die Erfassung der Phasenlage von zwei impulszahlgleichen Spuren, die Phasenlage von Spuren mit ungleicher Anzahl von Impulsen, Impulslänge-zu-Impulspause-Verhältnisse aller Impulse einer Spur, die Anzahl der Impulse einer Spur und eventuell auch die Erfassung der Frequenz des Drehimpulsgebers. Diese Eigenschaften können in beliebiger Kombination entweder alle oder nur teilweise erfasst werden. Dabei kann die Erfassung kontinuierlich, in regelmäßigen Abständen oder auf Anfrage durchgeführt werden. Ein weiterer Vorteil des Prüfgeräts liegt darin, dass die Ergebnisse in Form von Histogrammen dargestellt werden, so dass man auf einfache Art und Weise die Güte des Drehimpulsgebers überprüfen kann.

Als fester Bestandteil einer Maschine oder als ein an die Maschine anschließbares Gerät kann darüber hinaus die Prüfvorrichtung so eingesetzt werden, dass die Maschine bei Erfassung eines Problems eines Drehimpulsgebers automatisch abgeschaltet wird bzw. ein Warnsignal abgegeben wird.

## Patentansprüche

1. Verfahren zur Prüfung der Funktionstüchtigkeit eines Drehimpulsgebers (5), der auf mindestens zwei Spuren (A, B, C, D) je Spur pro Umdrehung eine vorbestimmte Anzahl von Impulsen mit vorbestimmten Impulslängen abgibt, wobei zur Prüfung der Funktionstüchtigkeit die Phasenlage zwischen mindestens einem Impuls einer Spur und mindestens einem Impuls einer anderen Spur erfasst und ein Vergleich mit einer Soll-Phasenlage durchgeführt wird; **dadurch gekennzeichnet, dass** eine Phasenlagenverteilung aus erfassten Phasenlagen einer vorbestimmten Anzahl an Impulsen bestimmt wird und mit einer Idealphasenlagenverteilung oder einer entsprechenden Herstellerspezifikation verglichen wird.

2. Verfahren nach Anspruch 1, wobei für zwei Spuren (B, C) mit gleicher Anzahl an Impulsen die Phasenlage der Impulse erfasst wird, die sich innerhalb einer Periode befinden.

3. Verfahren nach Anspruch 1, wobei für zwei Spuren (B, D) mit unterschiedlicher Anzahl an Impulsen die Phasenlage der Impulse erfasst wird, die sich innerhalb einer Periode, und dabei der kürzeren der beiden Perioden, befinden.

4. Verfahren nach Anspruch 2, wobei über mehrere Umdrehungen verteilt die Phasenlage zwischen entsprechenden Impulsen zweier Spuren für alle Impulse einer Umdrehung erfasst wird.

5. Verfahren nach einem der Ansprüche 1 bis 4, wobei zur Prüfung der Funktionstüchtigkeit zusätzlich das Verhältnis aus Impulslänge zu Impulspause für eine vorbestimmte Anzahl an Impulsen einer Spur erfasst wird.

6. Verfahren nach einem der Ansprüche 1 bis 5, wobei zur Prüfung der Funktionstüchtigkeit zusätzlich die Anzahl der Impulse einer Spur pro Umdrehung erfasst wird.

7. verfahren nach Anspruch 4 oder 5, wobei die Phasenlagenverteilung und/oder das Verhältnis aus Impulslänge zu Impulspause in der Form eines Histogramms ausgegeben wird.

8. Computerprogrammprodukt, mit einem oder mehreren Computer lesbaren Medien und mit computerausführbaren Befehlen zur Durchführung des Verfahrens nach einem der vorangehenden Ansprüche 1 bis 7.

9. Prüfvorrichtung zur Prüfung der Funktionstüchtigkeit eines Drehimpulsgebers (5), der auf mindestens zwei Spuren je Spur pro Umdrehung eine vorbestimmte Anzahl von Impulsen mit vorbestimmten Impulslängen abgibt, mit einer Schnittstelle (13) zum Lesen der Impulse der unterschiedlichen Spuren und einem Mittel (10) zum Analysieren der Impulse, wobei das Mittel (10) zum Analysieren so ausgebildet ist, dass die Phasenlage zwischen mindestens einem Impuls einer Spur und mindestens einem Impuls einer anderen Spur erfassbar und mit einer Soll-Phasenlage dieser beiden Impulse vergleichbar ist; **dadurch gekennzeichnet, dass** das Mittel (10) zum Analysieren so ausgebildet ist, dass eine Phasenlagenverteilung aus erfassten Phasenlagen einer vorbestimmten Anzahl an Impulsen bestimmbar ist und dass diese Phasenlagenverteilung mit einer Idealphasenlagenverteilung oder einer entsprechenden Herstellerspezifikation verglichen werden kann.

10. Prüfvorrichtung nach Anspruch 9, wobei das Mittel (10) zum Analysieren so ausgebildet ist, dass zur Prüfung der Funktionstüchtigkeit zusätzlich das Verhältnis aus Impulslänge zu Impulspause für eine vorbestimmte Anzahl an Impulsen einer Spur erfassbar ist.

11. Prüfvorrichtung nach Anspruch 9 oder 10, wobei das Mittel (10) zum Analysieren so ausgebildet ist, dass zur Prüfung der Funktionstüchtigkeit zusätzlich die Anzahl der Impulse einer Spur pro Umdrehung erfassbar ist.

12. Prüfvorrichtung nach Anspruch 10 mit einem Ausgabemittel (11) zur Ausgabe der Phasenlagenverteilung und/oder des Impulslänge zu Impulspause-Verhältnisses in der Form eines Histogramms.

13. Vorrichtung zur Behandlung von Flaschen in der Getränkeindustrie, insbesondere eine Abfüllvorrichtung, eine Etikettiermaschine, eine Streckblasmaschine oder ein Mixer, mit mindestens einem Drehimpulsgeber (5) zur Positionserfassung von sich in der Vorrichtung befindlichen Flaschen (3), und **gekennzeichnet durch** eine Prüfvorrichtung (9) zur Prüfung der Funktionstüchtigkeit des Drehimpulsgebers (5) gemäß wenigstens einem der Ansprüche 9-12.

14. Vorrichtung nach Anspruch 13 mit einer Schnittstelle (14) zum Anschließen der Prüfvorrichtung (9).

15. Vorrichtung nach einem der Ansprüche 13 bis 14, wobei die Prüfvorrichtung (9) so ausgebildet ist, dass kontinuierlich, zu vorgegebenen Zeitpunkten oder auf Anfrage die Funktionstüchtigkeit des Drehimpulsgebers (5) geprüft wird.

16. Vorrichtung nach einem der Ansprüche 13 bis 15 in Verbindung mit der Prüfvorrichtung nach einem der Ansprüche 9 bis 12, wobei die Prüfvorrichtung (9) so ausgebildet ist, dass, wenn die erfasste Phasenlagenverteilung einer ersten vorbestimmten Phasenlagenverteilung entspricht, automatisch eine Abschaltinstruktion an die Vorrichtung gegeben wird und/oder, wenn die erfasste Phasenlagenverteilung einer zweiten Phasenlagenverteilung entspricht, ein Warnsignal ausgegeben wird und/oder, wenn die erfassten Impulslänge-zu-Impulspause-Verhältnisse einem ersten vorbestimmten Impulslänge-zu-Impulspause-Verhältnis entsprechen, automatisch die Abschaltinstruktion an die Vorrichtung gegeben wird und/oder, wenn die erfasste Impulslänge-zu-Impulspause-Verhältnisse einem zweiten Impulslänge-zu-Impulspause-Verhältnis entsprechen, das Warnsignal ausgegeben wird.

## Claims

1. Method for testing the functional integrity of a rotary encoder (5) which emits a predetermined number of pulses with predetermined pulse lengths per revolution on each trace on at least two traces (A, B, C, D), in which, in order to test the functional integrity, the phase angle between at least one pulse of one trace and at least one pulse of another trace is recorded and a comparison with a setpoint phase angle is carried out, **characterised in that** a phase angle distribution of recorded phase angles of a predetermined number of pulses is determined and compared with an ideal phase angle distribution or a corresponding manufacturer specification.

2. Method according to Claim 1, wherein the phase angle of the pulses which lie within a period is recorded for two traces (B, C) with an equal number of pulses.

3. Method according to Claim 1, wherein the phase angle which lies within a period, and in this case the shorter of the two periods, is recorded for two traces (B, D) with a different number of pulses.

4. Method according to Claim 2, wherein the phase angle between corresponding pulses of two traces, distributed over a plurality of revolutions, is recorded for all pulses of a revolution.

5. Method according to one of Claims 1 to 4, wherein the ratio of pulse length to pulse pause for a predetermined number of pulses of a trace is additionally recorded in order to test the functional integrity.

6. Method according to one of Claims 1 to 5, wherein the number of pulses of a trace per revolution is additionally recorded in order to test the functional integrity.

7. Method according to Claim 4 or 5, wherein the phase angle distribution and/or the ratio of pulse length to pulse pause is output in the form of a histogram.

8. Computer program product, comprising one or more computer-readable media and comprising computer-executable instructions for carrying out the method according to one of the preceding Claims 1 to 7.

9. Test device for testing the functional integrity of a rotary encoder (5) which emits a predetermined number of pulses with predetermined pulse lengths per revolution on each trace on at least two traces, comprising an interface (13) for reading the pulses of the different traces and means (10) for analysing the pulses, the analysis means (10) being configured so that the phase angle between at least one pulse of one trace and at least one pulse of another trace can be recorded and compared with a setpoint phase angle of these two pulses, **characterised in that** the analysis means (10) is configured so that a phase angle distribution of recorded phase angles of a predetermined number of pulses can be determined, and **in that** this phase angle distribution can be compared with an ideal phase angle distribution or a corresponding manufacturer specification.

10. Test device according to Claim 9, wherein the analysis means (10) is configured so that the ratio of pulse length to pulse pause can additionally be recorded for a predetermined number of pulses of a trace in order to test the functional integrity.

11. Test device according to Claim 9 or 10, wherein the analysis means (10) is configured so that the number of pulses of a trace per revolution can additionally be recorded in order to test the functional integrity.

12. Test device according to Claim 10, comprising an output means (11) for output of the phase distribution and/or the pulse length to pulse pause ratio in the form of a histogram.

13. Device for processing bottles in the beverage industry, in particular a filling device, a labelling machine, a blow moulding machine or a mixer, comprising at least one rotary encoder (5) for recording the position of bottles (3) located in the device, and **characterised by** a test device (9) according to at least one of Claims 9 - 12 for testing the functional integrity of the rotary encoder (5).

14. Device according Claim 13, comprising an interface (14) for connection of the test device (9).

15. Device according one of Claims 13 and 14, wherein the test device (9) is configured so that the functional integrity of the rotary encoder (5) is tested continuously, at predetermined times or on request.

16. Device according one of Claims 13 to 15 in combination with the test device according one of Claims 9 to 12, wherein the test device (9) is configured so that a shutdown instruction is automatically transmitted to the device when the recorded phase angle distribution corresponds to a first predetermined phase angle distribution, and/or a warning signal is emitted when the recorded phase angle distribution corresponds to a second phase angle distribution, and/or the shutdown instruction is automatically transmitted to the device when the recorded pulse length to pulse pause ratios correspond to a first predetermined pulse length to pulse pause ratio, and/or the warning signal is emitted when the recorded pulse length to pulse pause ratios correspond to a second pulse length to pulse pause ratio.

## Revendications

1. Procédé pour vérifier la capacité de fonctionnement d'un codeur angulaire (5) qui, sur au moins deux pistes (A, B, C, D), émet pour chaque piste pour chaque tour un nombre prédéfini d'impulsions de longueurs d'impulsion prédéfinies, étant précisé que pour vérifier la capacité de fonctionnement, la relation de phase entre au moins une impulsion d'une piste et au moins une impulsion d'une autre piste est détectée et une comparaison avec une relation de phase théorique est effectuée ; **caractérisé en ce qu'**une répartition de relations de phase est définie à partir de relations de phase détectées d'un nombre prédéfini d'impulsions et est comparée à une répartition de relations de phase idéale ou à une spécification de fabricant correspondante.

2. Procédé selon la revendication 1, étant précisé que pour deux pistes (B, C) avec un même nombre d'impulsions, la relation de phase des impulsions qui se trouvent à l'intérieur d'une période est détectée.

3. Procédé selon la revendication 1, étant précisé que pour deux pistes (B, D) avec des nombres différents d'impulsions, la relation de phase des impulsions qui se trouvent à l'intérieur d'une période, et de la plus courte des deux périodes, est détectée.

4. Procédé selon la revendication 2, étant précisé que la relation de phase entre des impulsions correspondantes de deux pistes pour toutes les impulsions d'un tour est détectée, répartie sur plusieurs tours.

5. Procédé selon l'une des revendications 1 à 4, étant précisé que pour vérifier la capacité de fonctionnement, le rapport de la longueur d'impulsion sur l'intervalle d'impulsions est détecté en supplément pour un nombre prédéfini d'impulsions d'une piste.

6. Procédé selon l'une des revendications 1 à 5, étant précisé que pour vérifier la capacité de fonctionnement, le nombre d'impulsions d'une piste par tour est détecté en supplément.

7. Procédé selon la revendication 4 ou 5, étant précisé que la répartition de relations de phase et/ou le rapport de la longueur d'impulsion sur l'intervalle d'impulsions sont émis sous la forme d'un histogramme.

8. Produit de programme informatique avec un ou plusieurs supports lisibles par ordinateur et avec des ordres exécutables par ordinateur pour la mise en oeuvre du procédé selon l'une des revendications 1 à 7 précédentes.

9. Dispositif de vérification pour vérifier la capacité de fonctionnement d'un codeur angulaire (5) qui, sur au moins deux pistes, émet pour chaque piste pour chaque tour un nombre prédéfini d'impulsions de longueurs d'impulsion prédéfinies, avec une interface (13) pour lire les impulsions des différentes pistes et avec un moyen (10) pour analyser les impulsions, étant précisé que le moyen (10) d'analyse est conçu pour que la relation de phase entre au moins une impulsion d'une piste et au moins une impulsion d'une autre piste puisse être détectée et comparée à une relation de phase théorique de ces deux impulsions ; **caractérisé en ce que** le moyen (10) d'analyse est conçu pour qu'une répartition de relations de phase puisse être définie à partir de relations de phase détectées d'un nombre prédéfini d'impulsions et que cette répartition de relations de phase puisse être comparée à une répartition de relations de phase idéale ou à une spécification de fabricant correspondante.

10. Dispositif de vérification selon la revendication 9, étant précisé que le moyen (10) d'analyse est conçu de telle sorte que pour vérifier la capacité de fonctionnement, le rapport de la longueur d'impulsion sur l'intervalle d'impulsions puisse être détecté en supplément pour un nombre prédéfini d'impulsions d'une piste.

11. Dispositif de vérification selon la revendication 9 ou 10, étant précisé que le moyen (10) d'analyse est conçu de telle sorte que pour vérifier la capacité de fonctionnement, le nombre d'impulsions d'une piste par tour puisse être détecté en supplément.

12. Dispositif de vérification selon la revendication 10, avec un moyen d'émission (11) pour émettre sous la forme d'un histogramme la répartition de relations de phase et/ou le rapport longueur d'impulsion/intervalle d'impulsions.

13. Dispositif pour traiter des bouteilles dans l'industrie des boissons, en particulier un dispositif de remplissage, une étiqueteuse, une machine d'étirage-soufflage ou un mélangeur, avec au moins un codeur angulaire (5) pour détecter la position de bouteilles (3) qui se trouvent dans le dispositif, et **caractérisé par** un dispositif de vérification (9) pour vérifier la capacité de fonctionnement d'un codeur angulaire (5) selon l'une des revendications 9 à 12.

14. Dispositif selon la revendication 13 avec une interface (14) pour raccorder le dispositif de vérification (9).

15. Dispositif selon l'une des revendications 13 à 14, étant précisé que le dispositif de vérification (9) est conçu de telle sorte que la capacité de fonctionnement du codeur angulaire (5) soit vérifiée en continu, à des moments prédéfinis ou à la demande.

16. Dispositif selon l'une des revendications 13 à 15 associé au dispositif de vérification selon l'une des revendications 9 à 12, étant précisé que le dispositif de vérification (9) est conçu de telle sorte que si la répartition de relations de phase détectée correspond à une première répartition de relations de phase prédéfinie, une instruction d'arrêt soit automatiquement donnée au dispositif et/ou si la répartition de relations de phase détectée correspond à une seconde répartition de relations de phase, un signal d'avertissement soit émis et/ou si les rapports longueur d'impulsion-intervalle d'impulsions détectés correspondent à un premier rapport longueur d'impulsion-intervalle d'impulsions prédéfini, l'instruction d'arrêt soit automatiquement donnée au dispositif et/ou si les rapports longueur d'impulsion-intervalle d'impulsions correspondent à un second rapport longueur d'impulsions-intervalle d'impulsions, le signal d'avertissement soit émis.
